# EUROPEAN PATENT SPECIFICATION

(11) **EP 0 462 557 B1**
(45) Date of publication and mention of the grant of the patent: **17.01.1996**
(21) Application number: 91109944.8
(22) Date of filing: 18.06.1991
(51) Int. Cl.: C09D 17/00

(54) **Colorant compositions**
Farbzusammensetzungen
Compositions colorantes

(30) Priority: 19.06.1990 US 540208
(43) Date of publication of application: 27.12.1991
(73) Proprietor: UNION CARBIDE CHEMICALS AND PLASTICS COMPANY, INC., Danbury Connecticut 06817-0001 (US)
(72) Inventor: Busby, Molly I-Chin, Charleston, West Virginia 25304 (US); Olson, Kurt Damar, Cross Lanes, West Virginia 25313 (US)
(74) Representative: von Hellfeld, Axel, Dr. Dipl.-Phys.

(56) References cited:
- EP-A- 0 044 475
- US-A- 4 151 142

## Description

### Background of the Invention

The present invention relates to colorant compositions for use in coating compositions, e.g., paints and the like. More particularly, the invention relates to such cblorant compositions which have substantial benefits, e.g., good performance characteristics and reduced toxicity.

Colorant compositions or formulations have been used to impart desired color to coating compositions, e.g., base paints and the like. Examples of such compositions are the so-called universal colorants which are used, e.g., at retail outlets, to tint or color a white base coating composition, e.g., paint, which can be a water-borne composition, an emulsion, a water-reducible or water-dispersible composition or a solvent-borne composition. This coloring process is accomplished by the addition of a predetermined amount of one or more colorant compositions to the base coating composition, which is then agitated to disperse the colorant composition in the coating composition.

Such colorant compositions often include one or more pigments, combined with a so-called solvent. The colorant compositions may also include other ingredients, such as one or more pigment extenders and dispersants or surfactants. Water also may be, and often is, included. The pigment or pigments are often insoluble in the colorant composition and, therefore, the term solvent, as used in connection with the colorant composition, is a misnomer. A more proper term to describe the so-called solvent of these compositions is "liquid vehicle".

The liquid vehicle of the colorant composition should be substantially soluble in the coating composition. Colorant compositions are distinguished from the coating compositions in which they are used by being substantially free of one or more of the components, e.g., resins, solvents, driers and other coating composition additives, of the coating composition.

Ethylene glycol and diethylene glycol have been used as liquid vehicles in colorant compositions or formulations for some time. In some applications, however, it may be advantageous to replace these materials without substantially adversely affecting the performance characteristics of the composition.

Deitz U.S. Patent 3,549,396 discloses treating pigmentary metal oxides with the reaction product of an organic amine and a proton-donating organic nitrogen compound wherein the proton and at least one carbonyl group are attached to the nitrogen atom of the nitrogen compound. Deitz U.S. Patent 3,573,081 discloses treating a pigmentary metal oxide with a reaction product of an organic amine and an organic compound containing at least one activated methylene group. After each of these treatments, the pigment is dried prior to incorporating it into an oleoresinous or water-based coating system. Such treatment is disclosed as improving the dispersibility of the pigment in the coating system.

EP-A-0044475 relates to a pigment preparation which can be obtained via dispersing a pigment in presence of a heterocyclic compound which is a 5 to 9-membered ring having 1, 2 or 3 N atoms.

### Summary of the Invention

New colorant compositions for use in coating compositions, e.g., paint compositions and the like, have been discovered. The present colorant compositions allow for the elimination of solvents such as ethylene glycol and diethylene glycol, while maintaining the good performance characteristics associated with such glycols. The present compositions provide for reduced odor and reduced volatile organic components (VOC), e.g., relative to conventional colorant compositions including ethylene glycol and/or diethylene glycol.

The present invention pertains to the use of a colorant composition comprised of a pigment dispersed in a liquid vehicle to impart a color to a coating composition wherein at least a portion of said liquid vehicle is a nitrogen-containing component selected from the group consisting of compounds having a formula 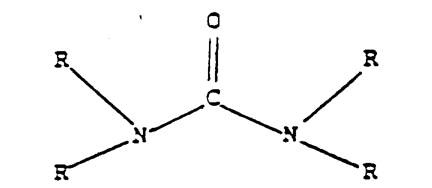 and mixtures thereof, wherein each R is independently selected from H, monovalent hydrocarbyl radicals having 1 to 4 carbon atoms, divalent hydrocarbyl radicals having 1 to 2 carbon atoms, and R'OH wherein R' is a divalent hydrocarbyl radical having 1 to 4 carbon atoms, provided that said compound includes at least one hydroxyl group and if one R is a divalent radical then another R is a bond in said divalent radical or is another divalent radical and wherein said colorant composition is substantially free of film forming resins.

In one particularly useful embodiment, the compound is 1-(2-hydroxyethyl)-2-imidizolidinone, commonly called 2-hydroxyethylethylene urea, hereinafter referred to as HEEU. This compound has the formula

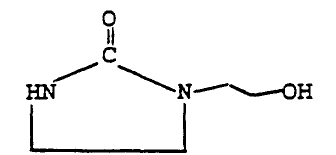

### Detailed Description of the Invention

The present colorant compositions include a pigment component, i.e., at least one pigment, and a liquid vehicle. Such colorant compositions are designed for use with coating compositions, in particular paints and the like. Such colorant compositions include a pigment component in an amount effective to impart a desired color to the coating composition into which the colorant composition is combined, preferably as a minor amount of the total colored coating composition. These colorant compositions may be distinguished from the coating compositions in which they are used in that such colorant compositions often are substantially free of the coating or film forming resins, and/or driers and/or one or more other components which are conventionally present in coating compositions. Such colorant compositions, however, may include additional components, for example, pigment extenders, dispersing agents, e.g., surfactants, and water, which are conventionally included in colorant compositions. Preferably, the present colorant compositions are formulated to be usable, e.g., compatible, with water-borne coating compositions, emulsion coating compositions, water-reducible or water-dispersible coating compositions and solvent-borne coating compositions.

In accordance with the present invention, at least a portion of the liquid vehicle of the present colorant composition is a nitrogen-containing component selected from compounds having the formula 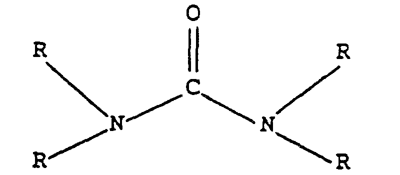 and mixtures thereof, wherein each R is independently selected from the group consisting of H, monovalent hydrocarbyl radicals having 1 to 4, preferably 1 to 3, carbon atoms, divalent hydrocarbyl radicals having 1 to 2 carbon atoms, and R'OH wherein R' is a divalent hydrocarbyl radical having 1 to 4, preferably 1 to 3, carbon atoms, provided that the compound includes at least one hydroxyl group and if one R is a divalent radical then another R is a bond in this divalent radical or is another divalent radical.

Among the useful monovalent hydrocarbyl radicals are alkyl radicals and alkenyl radicals, in particular alkyl radicals. Specific examples include methyl, ethyl, propyl, butyl, ethenyl, propenyl and butenyl radicals. Among the useful divalent hydrocarbyl radicals are alkylene radicals. Specific examples include methylene, ethylene, propylene and butylene radicals.

In one embodiment, the presently useful nitrogen-containing component is selected so that each R is selected from H, alkyl, alkylene, and R'OH wherein R' is alkylene, provided that if one R is alkylene then another R is a bond in this alkylene or is another alkylene radical.

One important feature of the presently useful nitrogen-containing component is that it be compatible with not only the other components of the colorant composition, but also with the coating composition in which the colorant composition is used. In particular, the nitrogen-containing component of the colorant composition is preferably soluble in the liquid material of the coating composition. In this embodiment, the nitrogen-containing component in the colorant composition has sufficient solubility, in particular water solubility, to be soluble in the coating composition, in particular in the aqueous liquid material of the coating composition, with which the colorant composition is combined at normal use conditions of the coating composition.

In order to provide adequate water solubility, the presently useful nitrogen-containing components are preferably selected from compounds in which each R has no more than 2 carbon atoms and/or all of the Rs have a total of no more than 4 carbon atoms. A particularly useful such compound is HEEU, which has the formula

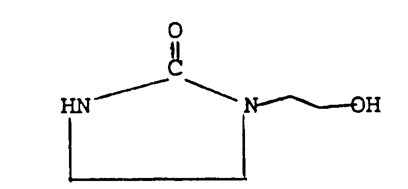

The compound or compounds making up the presently useful nitrogen-containing component can be produced by conventional and well known methods. For example, such compounds can be prepared by reacting an appropriate amine and an appropriate nitrogen compound, such as is described in Deitz, U.S. Patents 3,549,396 and 3,573,081, each of which is incorporated in its entirety by reference herein.

The presently useful nitrogen-containing component provides colorant compositions which have substantial benefits, e.g., similar or better performance characteristics and reduced toxicity, relative to conventional colorant compositions. For example, paints including the present colorant compositions often exhibit scrub resistance substantially equal to or better than paints made with ethylene glycol and/or diethylene glycol-containing colorants. Also, such nitrogen-containing components have an increased tendency to be retained in the surface coating and, therefore, has a reduced tendency to contribute to the volatile organic compounds or content (VOC) in the coating composition. In addition, the present nitrogen-containing components provide for good pigment component wetting and dispersion properties, are compatible with a wide variety of coating compositions, e.g., water-borne paints, emulsion paints, water-reducible or water-dispersible paints and solvent-borne paints, are relatively easy to process into a colorant composition and have a generally inoffensive odor. Thus, a satisfactory universal colorant composition can be produced using such nitrogen-containing components and being substantially free of either or both of ethylene glycol and diethylene glycol.

The amount of the nitrogen-containing component included in the present colorant compositions may vary over a wide range. For example, the nitrogen-containing component may be present in an amount in the range of 1% to 100%, preferably at least about 10%, by weight of the liquid vehicle in the colorant composition. In one embodiment, the nitrogen-containing component is present in an amount of more than 10% by weight of the pigment component present in the colorant composition. More preferably, the nitrogen-containing component comprises 15% to 50%, and still more preferably 15% to 30%, by weight of the liquid vehicle in the colorant composition.

One or more other liquid materials are employed in the colorant composition when the nitrogen-containing component is only a portion of the liquid vehicle. Such other liquid material or materials should be compatible with the nitrogen-containing component, the other components of the colorant composition and the combined, coating composition with which the colorant composition is combined and should be useful in the present colorant composition, preferably substantially without interfering with the properties of the colorant composition. Preferably, the present colorant compositions are substantially free of ethylene glycol and diethylene glycol. Examples of other liquid materials which may be employed are alkoxytriglycols, glycerol, propylene glycol, alkoxy polyalkylene glycols, polyalkylene glycols, in particular polyethylene glycols having a molecular weight in the range of 200 to 600, diethylene glycol -monoethyl ether, water and mixtures thereof. When one or more other liquid materials are employed, water is preferably present as a portion of the liquid vehicle in the present colorant compositions.

The present colorant compositions include a pigment component, i.e., one or more pigments. A pigment is and remains substantially insoluble when used in the present colorant compositions, coating compositions and surface coatings. The presently useful pigments may be either organic or inorganic pigments. Preferably, the pigment component is selected from inorganic pigments, meaning to include therein carbon black and the like, and mixtures thereof. Examples of pigments which can be used and the color which such pigment imparts to the colorant composition, and ultimately to the coating composition and surface coating, are as follows:

| | |
|---|---|
| Black | Lamp Black (Carbon Black) |
| Blue | Phthalo Blue |
| Green | Phthalo Green |
| Umber | Raw Umber |
| Red | Toluidine Red |
| | Red Iron Oxide |
| | Quinacridone Red |
| Yellow | Diarylide Yellow |
| | Yellow Iron Oxide |
| Orange | Dinitranaline Orange |
| Violet | Quinacridone Violet |

The pigment component is preferably present in the present colorant composition as fine particles, more preferably having a particle size of less than about 15 microns, sufficient to provide the uniformity of color desired in the colorant composition, the final coating composition and surface coating. Such pigments can be conventionally prepared, e.g., by milling, grinding and the like, to provide the desired particle size.

The amount of pigment component present in the colorant compositions of the present invention is effective to provide the desired color to the colorant composition. Preferably, the pigment component is present in an amount of at least 1% by weight of the total colorant composition, more preferably, at least about 10% by weight of the total colorant composition. In certain instances, the pigment component can be present in an amount of about 70% or more by weight of the total colorant composition. Still more preferably, the pigment component is present in the present colorant composition in an amount in the range of about 10% to about 70% by weight of the total colorant composition.

The present colorant compositions often advantageously include a dispersant component, e.g., at least one surface active agent or surfactant. Such dispersant component is preferably present in an amount effective to facilitate the dispersing of the pigment component in the liquid vehicle. Suitable dispersant components can be categorized into the following groups: anionic, cationic, amphoteric and non-ionic. Because of their lower cost and higher efficiency in non-acidic systems, anionic dispersants are most commonly used for dispersing inorganic pigments. Such anionic materials are believed to act by imparting a negative charge to the pigment particles. The anionic dispersants reduce pigment re-aggregation and facilitate maintaining the dispersion through the mutually repelling nature of like charges on each pigment particle. Examples of such anionic dispersants include alkyl arylsulfonates sold by ICI Americas, Inc. under the trademark Atlas G-3300, and sodium salts of polymeric carboxylic acids sold by Rohm and Haas Company under the trademark Tamol^{®} 731.

Cationic dispersants are not normally used in pigment dispersions because most vehicles in which the pigments are placed are anionically dispersed. Combinations of anionic surfactants and cationic surfactants in the same system may cause pigment coagulation.

Amphoteric dispersants can generate cations in acid media and anions in basic media. Soya lecithin is an example of an amphoteric surfactant which may be used in the present colorant compositions.

Non-ionic dispersants do not ionize in solution and are believed to function to move the wetted pigment particles into the body of the liquid vehicle by providing an "insulating" layer which achieves permanent separation of the particles. Such non-ionic dispersants are often referred to as stabilizers. An example of a non-ionic surfactant useful in the present composition is nonylphenol ethoxyolate sold by Union Carbide Chemicals and Plastics Company Inc. under the trademark Tergitol^{®}, Combinations of different types of dispersants are frequently used to advantage. For example, the present colorant compositions may include a mixture of an anionic dispersant and a non-ionic dispersant.

The amount of dispersant component included, if any, in the present colorant compositions is such as to be effective to perform the desired function, e.g., as described herein. The specific amount of dispersant component used depends, for example, on the other components present in the composition, the specific dispersant or dispersants employed and the desired result to be achieved. Preferably, the amount of dispersants included in the present colorant compositions is at least about 1% by weight of the total colorant composition. This percentage is based upon active dispersant, which is often available in diluted form. Other components may be present in the present colorant compositions. For example, the colorant compositions may include one or more materials which act to extend the pigment component in the colorant composition. Such extender component is preferably present in an amount effective to act as a pigment filler. That is, the extender component is present, preferably in the form of fine solid particles, in an amount such that a reduced amount of pigment component is needed to achieve a colorant composition having the desired color properties. In other words, the extender component cooperates with the pigment component to provide the colorant composition with the desired color. Such extender components may also act as flow control agents or as anti-settling additives, or as leveling or flatting agents for the final surface coating.

Examples of useful extender components include alkali metal and alkaline earth metal silicates, aluminates, sulfates, carbonates and mixtures thereof, such as barium sulfate, calcium carbonate, calcium sulfate, calcium silicate, magnesium sulfate and the like.

The amount of extender component, if any, included in the present colorant compositions is such as to be effective to perform the desired function, e.g., as described herein. The specific amount of extender component used depends, for example, on the other components present in the composition, the specific extender component employed and the desired result to be achieved. Preferably, the amount of extender component included in the present colorant compositions is at least 1%, and more preferably in the range of 20% to 35%, by weight of the total colorant composition.

The present colorant compositions can be prepared, for example, using conventional techniques for producing fine particle dispersions in liquids. For example, the liquid vehicle and dispersant component can be blended together. The solid particles are then dispersed into this liquid with mixing to produce the colorant composition. The colorant composition can be blended into a base coating composition, with mixing, in a desired amount to achieve the desired color in the coating composition.

The following non-limiting examples illustrate certain aspects of the present invention.

### EXAMPLES 1 TO 4

A series of four (4) colorant compositions were prepared by conventional blending techniques. These colorant compositions were as follows:

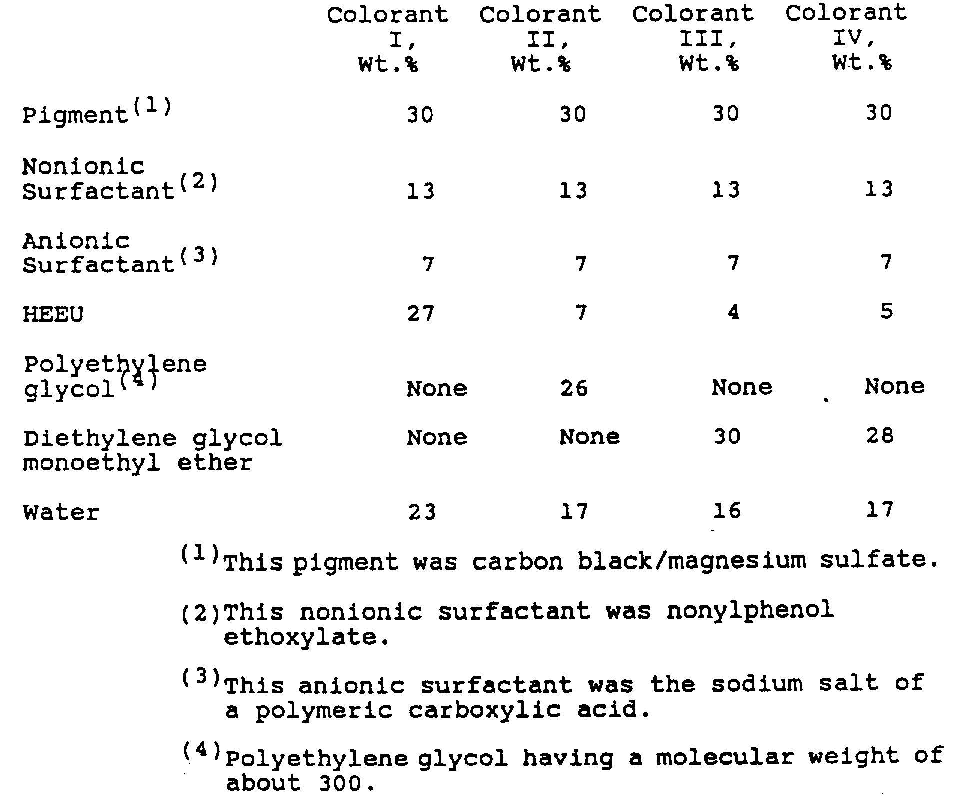

Each of these colorant compositions was combined with four (4) commercially available base paints to provide tinted paints including 10% by weight of the colorant composition. These commercially available base paints were:
- Paint 1 -: A flat latex house paint including 31.1% by weight of pigment and related components and 68.9% by weight of vehicle and related components and sold by Valspar Corporation under the trademark Colony.
- Paint 2 -: An exterior latex flat paint including 46.4% by weight of non-volatile components and 53.6% by weight of volatile components and sold by Farm and Fleet under the trademark F and F.
- Paint 3 -: A semi gloss alkyd enamel including about 52% by weight of pigment and related components and about 48% by weight of vehicle and related components and sold by Valspar Corporation under the trademark Valspar^{®}.
- Paint 4 -: A semi gloss alkyd enamel clear base paint including 42.5% by weight of pigment and 57.5% by weight of vehicle and related components and sold by Valspar Corporation under the trademark Valspar^{®}.

Each of these tinted paints was subjected to the following scrub test. Paint films, 7 mil thick, of both the test paint and a control paint are cast side by side on a black Leneta scrub panel and dried for 3 days for the latex paints and 7 days for the alkyd paints. Each of the films was then subjected to scrubbing on a Gardener straight line scrub machine using 10 g. of ASTM scrub media and 5 ml of water for every 400 cycles. Initial failure is defined as sufficient paint removal to expose the black substrate which is placed over a shim (8 inch by 0.5 inch by 10 mil thick) for the test.

The control paints were produced by combining 10% by weight of a colorant composition made by substituting a 50/50 (by weight) blend of ethylene glycol and diethylene glycol for the HEEU, and HEEU and polyethylene glycol in Colorants I and II, respectively, and for the HEEU and diethylene glycol monoethyl ether in Colorants III and IV. Such blends of ethylene glycol and diethylene glycol are conventionally used in colorant compositions.

Results of these scrub tests were as follows. The results are expressed as a percentage of the scrubbing time to initial failure achieved with the tinted paint being tested relative to the scrubbing time to initial failure obtained with the control paint.

| | Colorant I | Colorant II | Colorant III | Colorant IV |
|---|---|---|---|---|
| Tinted Paint 1 | 61 | 74 | 121 | 112 |
| Tinted Paint 2 | 92 | not tested | 146 | 120 |
| Tinted Paint 3 | 80 | 71 | 111 | 104 |
| Tinted Paint 4 | 77 | 64 | 113 | 112 |

These results indicated that HEEU by itself and in combination with other organic materials is useful in colorant compositions. The relatively low scrub time test results for Colorants I and II are believed to be the result of incomplete drying of the film. The results for Colorants III and IV indicate that colorant compositions including HEEU can be formulated which provide improved results relative to conventional ethylene glycol/diethylene glycol-based systems.

### EXAMPLE 5

The four (4) tinted paints including 10% by weight of Colorant I were again tested for scrubbing strength, using the scrubbing test procedure outlined above. However, the tinted paint films and control paint films were dried under several different conditions, as set forth below, before the scrubbing test was performed.

Results of these scrub tests were as follows. The results are expressed in the same manner as in Examples 1 to 4.

| Drying Conditions | | | | | |
|---|---|---|---|---|---|
| Tinted Paint | 50°C for 1 hr. | 50°C for 3 hrs. | 50°C for 1 hr., Ambient Air for 3 days | 50°C for 3 hrs., Ambient Air for 3 days | Ambient Air for 30 days |
| 1(61) | 102 | 107 | 87 | 90 | 92 |
| 2(92) | 75 | 78 | 61 | 72 | not tested |
| 3(80) | 104 | 97 | 108 | 99 | not tested |
| 4(77) | 94 | 74 | 90 | 91 | not tested |

These results indicate that the method of drying may affect the strength of the film derived from a paint using an HEEU-containing colorant. When compared with the results with the Colorant I containing tinted paints in Examples 1 to 4 (shown in parentheses at the left in the immediately preceding table), in three of the four systems tested, more complete drying of the film results in scrub tests results which are substantially similar to the results obtained using an ethylene glycol/diethylene glycol-containing colorant. The reduced scrub resistance obtained using Colorant I in Example 1 to 4 was probably the result of incomplete drying of the film. It is important to note that the inclusion of HEEU in the colorant composition does not substantially contribute to the VOC of the final coating composition.

While this invention has been described with respect to various specific examples and embodiments, it is to be understood that the invention is not limited thereto and that it can be variously practiced within the scope of the following claims.

## Claims

1. Use of a colorant composition comprised of a pigment dispersed in a liquid vehicle to impart a color to a coating composition wherein at least a portion of said liquid vehicle is a nitrogen-containing component selected from the group consisting of compounds having a formula 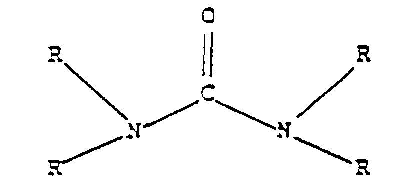 and mixtures thereof, wherein each R is independently selected from H, monovalent hydrocarbyl radicals having 1 to 4 carbon atoms, divalent hydrocarbyl radicals having 1 to 2 carbon atoms, and R'OH wherein R' is a divalent hydrocarbyl radical having 1 to 4 carbon atoms, provided that said compound includes at least one hydroxyl group and if one R is a divalent radical then another R is a bond in said divalent radical or is another divalent radical and wherein said colorant composition is substantially free of film forming resins.

2. The use of claim 1, wherein said nitrogen-containing component is present in an amount of at least about 10% by weight of said liquid vehicle.

3. The use of claim 1, wherein said nitrogen-containing component is present is an amount of more than about 10% by weight of said pigment component.

4. The use of claim 1, wherein said nitrogen-containing component is present in an amount in the range of 1% to 100% by weight of said liquid vehicle.

5. The use, wherein said nitrogen-containing component is present in an amount in the range of 15% to 50% by weight of said liquid vehicle.

6. The use of claim 1, wherein said nitrogen-containing component is present in an amount in the range of 15% to 30% by weight of said liquid vehicle.

7. The use of claim 1, wherein said pigment component is present in an amount of at least about 1% by weight.

8. The use of claim 1 , wherein said nitrogen-containing component is soluble in said coating composition.

9. The use of claim 1, wherein each R is selected from the group consisting of H, alkyl, alkylene and R'OH wherein R' is alkylene.

10. The use of claim 1, wherein said monovalent hydrocarbyl radicals have 1 to 3 carbon atoms.

11. The colorant composition of claim 1, wherein each R has no more than 2 carbon atoms.

12. The use of claim 1, wherein all of said Rs have a total of no more than 4 carbon atoms.

13. The use of claim 1, which is suitable for use in water-borne coating compositions, emulsion coating compositions, water-reducible coating compositions, and solvent-borne coating compositions.

14. The use of claim 1, wherein said nitrogen-containing component has the formula

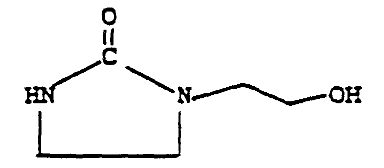

15. The use of claim 1, wherein said liquid vehicle further includes a component selected from the group consisting of alkoxytrigiycols, glycerol, propylene glycol, alkoxy polyalkylene glycols, polyalkylene glycols, diethylene glycol monoethyl ether, water and mixtures thereof.

16. The use of claim 1, which further comprises a dispersant component present in an amount effective to facilitate the dispersing of said pigment component in said liquid vehicle, and an extender component present in an amount effective to act as a pigment filler.

17. The use of claim 1 wherein said pigment component is selected from the group consisting of inorganic pigments and mixtures thereof, and at least a portion of said liquid vehicle being a compound having a formula

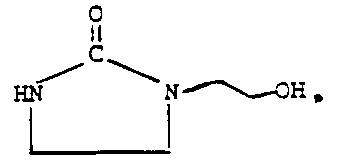

18. The use of claim 17 wherein said compound is present in an amount of at least about 10% by weight of said liquid vehicle.

19. The use of claim 17 wherein said compound is present is an amount of more than about 10% by weight of said pigment component.

20. The use of claim 17 wherein said compound is present in an amount in the range of 1% to 100% by weight of said liquid vehicle.

21. The use of claim 17 wherein said compound is present in an amount in the range of 15% to 50% by weight of said liquid vehicle.

22. The use of claim 17 wherein said compound is present in an amount in the range of 15% to 25% by weight of said liquid vehicle.

23. The use of claim 17 wherein said liquid vehicle further includes a component selected from the group consisting of alkoxytriglycols, glycerol, propylene glycol, alkoxy polyalkylene glycols, polyalkylene glycols, diethylene glycol monoethyl ether, water and mixtures thereof.

24. The use of claim 17 which is suitable for use in water-borne coating compositions, emulsion coating compositions, water-reducible coating compositions, and solvent-borne coating compositions.

25. The use of claim 17 which further comprises a dispersant component present in an amount effective to facilitate the dispersing of said pigment component in said liquid vehicle, and an extender component present in an amount effective to act as a pigment filler.

## Patentansprüche

1. Verwendung einer Farbzusammensetzung, umfassend ein in einem flüssigen Vehikel dispergiertes Pigment, um einer Beschichtungszusammensetzung eine Farbe zu vermitteln, wobei mindestens ein Teil des flüssigen Vehikels eine stickstoffhaltige Komponente ist, die aus der aus Verbindungen der Formel 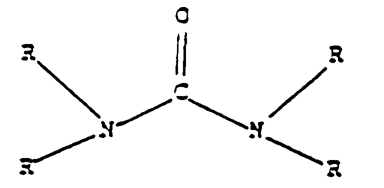 und Mischungen daraus bestehenden Gruppe gewählt ist, worin jedes R unabhängig aus H, einwertigen Kohlenwasserstoffresten mit 1 bis 4 Kohlenstoffatomen, zweiwertigen Kohlenwasserstoffresten mit 1 bis 2 Kohlenstoffatomen, und R'OH, worin R' ein zweiwertiger Kohlenwasserstoffrest mit 1 bis 4 Kohlenstoffatomen ist, gewählt ist, vorausgesetzt, daß die Verbindung mindestens eine Hydroxylgruppe beinhaltet, und, wenn ein R ein zweiwertiger Rest ist, ein anderes R eine Bindung in dem zweiwertigen Rest oder ein anderer zweiwertiger Rest ist, und wobei die Farbzusammensetzung im wesentlichen keine filmbildenden Harze aufweist.

2. Verwendung nach Anspruch 1, wobei die stickstoffhaltige Komponente in einer Menge von mindestens etwa 10 Gew.-% des flüssigen Vehikels vorliegt.

3. Verwendung nach Anspruch 1, wobei die stickstoffhaltige Komponente in einer Menge von mehr als etwa 10 Gew.-% der Pigmentkomponente vorliegt.

4. Verwendung nach Anspruch 1, wobei die stickstoffhaltige Komponente in einer Menge im Bereich von 1 bis 100 Gew.-% des flüssigen Vehikels vorliegt.

5. Verwendung nach Anspruch 1, wobei die stickstoffhaltige Komponente im Bereich von 15 bis 50 Gew.-% des flüssigen Vehikels vorliegt.

6. Verwendung nach Anspruch 1, wobei die stickstoffhaltige Komponente im Bereich von 15 bis 30 Gew.-% des flüssigen Vehikels vorliegt.

7. Verwendung nach Anspruch 1, wobei die Pigmentkomponente in einer Menge von mindestens etwa 1 Gew.-% vorliegt.

8. Verwendung nach Anspruch 1, wobei die stickstoffhaltige Komponente in der Beschichtungszusammensetzung löslich ist.

9. Verwendung nach Anspruch 1, wobei jedes R aus der aus H, Alkyl, Alkylen und R'OH, worin R' Alkylen ist, bestehenden Gruppe gewählt wird.

10. Verwendung nach Anspruch 1, wobei die einwertigen Kohlenwasserstoffreste 1 bis 3 Kohlenstoffatome aufweisen.

11. Farbzusammensetzung nach Anspruch 1, worin jedes R nicht mehr als 2 Kohlenstoffatome besitzt.

12. Verwendung nach Anspruch 1, wobei alle Rs insgesamt nicht mehr als 4 Kohlenstoffatome aufweisen.

13. Verwendung nach Anspruch 1, wobei eine Eignung für wassergetragene Beschichtungszusammensetzungen, Emulsionsbeschichtungszusammensetzungen, wasserverdünnbare Beschichtungszusammensetzungen und lösungsmittelgetragene Beschichtungszusammensetzungen vorliegt.

14. Verwendung nach Anspruch 1, wobei die stickstoffhaltige Komponente folgende Formel besitzt:

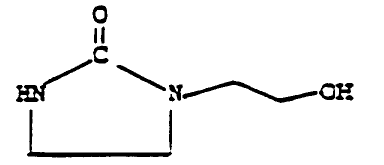

15. Verwendung nach Anspruch 1, wobei das flüssige Vehikel ferner eine Komponente einschließt, die aus der Alkoxytriglykole, Glycerin, Propylenglykol, Alkoxypolyalkylenglykole, Polyalkylenglykole, Diethylenglykolmonoethylether, Wasser und Mischungen davon umfassenden Gruppe gewählt wird.

16. Verwendung nach Anspruch 1, wobei ferner eine Dispergierkomponente eingeschlossen ist, die in einer wirksamen Menge vorliegt, um die Dispergierung der Pigmentkomponente in dem flüssigen Vehikel zu erleichtern, und eine Streckkomponente, die in einer wirksamen Menge vorliegt, um als Pigmentfüllstoff zu wirken.

17. Verwendung nach Anspruch 1, wobei die Pigmentkomponente aus der anorganische Pigmente und Mischungen davon umfassenden Gruppe gewählt wird, und wobei mindestens ein Teil des flüssigen Vehikels eine Verbindung folgender Formel ist:

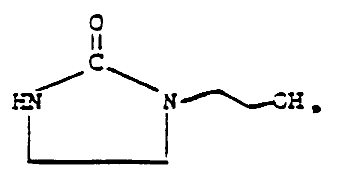

18. Verwendung nach Anspruch 17, wobei die Verbindung in einer Menge von mindestens etwa 10 Gew.-% des flüssigen Vehikels vorliegt.

19. Verwendung nach Anspruch 17, wobei die Verbindung in einer Menge von mehr als etwa 10 Gew.-% der Pigmentkomponente vorliegt.

20. Verwendung nach Anspruch 17, wobei die Verbindung in einer Menge im Bereich von 1 bis 100 Gew.-% des flüssigen Vehikels vorliegt.

21. Verwendung nach Anspruch 17, wobei die Verbindung in einer Menge im Bereich von 15 bis 50 Gew.-% des flüssigen Vehikels vorliegt.

22. Verwendung nach Anspruch 17, wobei die Verbindung in einer Menge im Bereich von 15 bis 25 Gew.-% des flüssigen Vehikels vorliegt.

23. Verwendung nach Anspruch 17, wobei das flüssige Vehikel ferner eine Komponente einschließt, die aus der Alkoxytriglykole, Glycerin, Propylenglykol Alkoxypolyalkylenglykole, Polyalkylenglykole, Diethylenglykolmonoethylether, Wasser und Mischungen davon umfassenden Gruppe gewählt wird.

24. Verwendung nach Anspruch 17, wobei eine Eignung für wassergetragene Beschichtungszusammensetzungen, Emulsionsbeschichtungszusammensetzungen, wasserverdünnbare Beschichtungszusammensetzungen und lösungsmittelgetragene Beschichtungszusammensetzungen vorliegt.

25. Verwendung nach Anspruch 17, wobei ferner eine Dispergierkomponente eingeschlossen ist, die in einer wirksamen Menge vorliegt, um die Dispergierung der Pigmentkomponente in dem flüssigen Vehikel zu erleichtern, und eine Streckkomponente, die in einer wirksamen Menge vorliegt, um als Pigmentfüllstoff wirken.

## Revendications

1. Utilisation d'une composition de colorant constituée d'un pigment dispersé dans un véhicule liquide pour conférer une couleur à une composition de revêtement, dans laquelle au moins une portion dudit véhicule liquide consiste en un constituant azoté choisi dans le groupe consistant en composés répondant à la formule 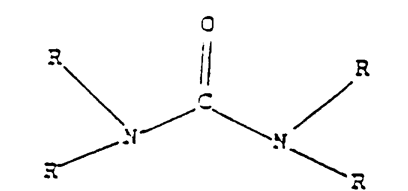 et leurs mélanges, formule dans laquelle chaque groupe R est choisi, indépendamment, entre H, des radicaux hydrocarbyle monovalents ayant 1 à 4 atomes de carbone, des radicaux hydrocarbyle divalents ayant 1 à 2 atomes de carbone, et des radicaux R'OH dans lesquels R' représente un radical hydrocarbyle divalent ayant 1 à 4 atomes de carbone, sous réserve que ledit composé comprenne au moins un groupe hydroxyle et, si un radical R représente un radical divalent, alors un autre radical R représente une liaison dans ledit radical divalent ou représente un autre radical divalent, et dans laquelle ladite composition de colorant est pratiquement dépourvue de résines filmogènes.

2. Utilisation suivant la revendication 1, dans laquelle le constituant azoté est présent en une quantité d'au moins environ 10 % en poids du véhicule liquide.

3. Utilisation suivant la revendication 1, dans laquelle le constituant azoté est présent en une quantité supérieure à environ 10 % en poids du pigment.

4. Utilisation suivant la revendication 1, dans laquelle le constituant azoté est présent en une quantité de 1 % à 100 % en poids du véhicule liquide.

5. Utilisation suivant la revendication 1, dans laquelle le constituant azoté est présent en une quantité de 15 % à 50 % en poids du véhicule liquide.

6. Utilisation suivant la revendication 1, dans laquelle le constituant azoté est présent en une quantité de 15 % à 30 % en poids du véhicule liquide.

7. Utilisation suivant la revendication 1, dans laquelle le pigment est présent en une quantité d'au moins environ 1 % en poids.

8. Utilisation suivant la revendication 1, dans laquelle le constituant azoté est soluble dans la composition de revêtement.

9. Utilisation suivant la revendication 1, dans laquelle chaque groupe R est choisi dans le groupe consistant en H, un groupe alkyle, un groupe alkylène et un groupe R'OH dans lequel R' représente un groupe alkylène.

10. Utilisation suivant la revendication 1, dans laquelle les radicaux hydrocarbyle monovalents ont 1 à 3 atomes de carbone.

11. Composition de colorant suivant la revendication 1, dans laquelle chaque groupe R n'a pas plus de 2 atomes de carbone.

12. Utilisation suivant la revendication 1, dans laquelle tous les groupes R ont un nombre total d'atomes de carbone non supérieur à 4.

13. Utilisation suivant la revendication 1, qui convient pour une utilisation dans des compositions aqueuses de revêtement, des compositions de revêtement en émulsions, des compositions de revêtement réductibles par l'eau et des compositions de revêtement à base de solvants.

14. Utilisation suivant la revendication 1, dans laquelle le constituant azoté répond à la formule

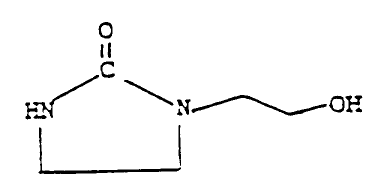

15. Utilisation suivant la revendication 1, dans laquelle le véhicule liquide comprend en outre un constituant choisi dans le groupe consistant en alkoxytriglycols, glycérol, propylène-glycol, alkoxypolyalkylène-glycols, polyalkylène-glycols, éther monoéthylique de diéthylène-glycol, eau et leurs mélanges.

16. Utilisation suivant la revendication 1, qui comprend en outre un constituant dispersant présent en une quantité efficace pour faciliter la dispersion du pigment dans le véhicule liquide, et un constituant diluant présent en une quantité efficace pour jouer le rôle de charge-pigment.

17. Utilisation suivant la revendication 1, dans laquelle le pigment est choisi dans le groupe consistant en pigments inorganiques et leurs mélanges, et au moins une portion du véhicule liquide consiste en un composé répondant à la formule

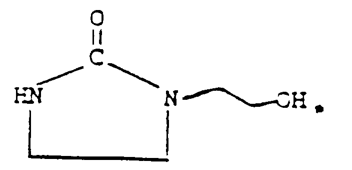

18. Utilisation suivant la revendication 17, dans laquelle le composé est présent en une quantité d'au moins environ 10 % en poids du véhicule liquide.

19. Utilisation suivant la revendication 17, dans laquelle le composé est présent en une quantité supérieure à environ 10 % en poids du pigments.

20. Utilisation suivant la revendication 17, dans laquelle le composé est présent en une quantité de 1 % à 100 % en poids du véhicule liquide.

21. Utilisation suivant la revendication 17, dans laquelle le composé est présent en une quantité de 15 % à 50 % en poids du véhicule liquide.

22. Utilisation suivant la revendication 17, dans laquelle le composé est présent en une quantité de 15 % à 25 % en poids du véhicule liquide.

23. Utilisation suivant la revendication 17, dans laquelle le véhicule liquide comprend en outre un constituant choisi dans le groupe consistant en alkoxytriglycols, glycérol, propylène-glycol, alkoxypolyalkylène-glycols, polyalkylène-glycols, éther monoéthylique de diéthylène-glycol, eau et leurs mélanges.

24. Utilisation suivant la revendication 17, qui convient pour une utilisation dans des compositions aqueuses de revêtement, des compositions de revêtement en émulsions, des compositions de revêtement réductibles par l'eau et des compositions de revêtement à base de solvants.

25. Utilisation suivant la revendication 17, qui comprend en outre un constituant dispersant présent en une quantité efficace pour faciliter la dispersion du pigment dans le véhicule liquide, et un constituant diluant présent en une quantité efficace pour jouer le rôle de charge-pigment.
